# EUROPEAN PATENT SPECIFICATION

(11) **EP 2 170 773 B1**
(45) Date of publication and mention of the grant of the patent: **10.10.2012**
(21) Application number: 08757916.5
(22) Date of filing: 12.06.2008
(51) Int. Cl.: C02F 1/66, C02F 1/72

(54) **METHOD FOR DECONTAMINATION OF EXPLOSIVES PRODUCTION PROCESS WASTE WATER**
VERFAHREN ZUR DEKONTAMINATION VON ABWASSER AUS EINEM VERFAHREN ZUR HERSTELLUNG VON SPRENGSTOFFEN
PROCÉDÉ DE DÉCONTAMINATION D'EAUX USÉES PRODUITES PAR LA PRODUCTION D'EXPLOSIFS

(30) Priority: 13.06.2007 CZ 20070409
(43) Date of publication of application: 07.04.2010
(73) Proprietor: Austin Detonator s.r.o., Jasenice 712 755 01 Vsetin (CZ)
(72) Inventor: VALENTA, Pavel, 755 01 Vsetin (CZ); SPANK, Zlatko, 160 00 Praha 6 (CZ); MASTNY, Libor, 130 00 Praha 3 (CZ); HLAVSA, Martin, 460 02 Liberec 3 (CZ); HNAT, Igor, 755 01 Vsetin (CZ)
(74) Representative: Vandelikova, Jana
(86) International application number: PCT/CZ2008/000065
(87) International publication number: WO 2008/151583

(56) References cited:
- AU-A1- 2004 201 293
- JP-A- 4 313 391
- JP-A- 2005 046 763
- US-A- 5 073 273
- US-A- 5 457 265
- US-A- 6 127 591
- ADAM M.L., COMFORT S.D., MORLEY M.C., SNOW D.D.: "Remediating RDX-Contaminated Ground Water with Permanganate: Laboratory Investigations for the Pantex Perched Aquifer" JOURNAL OF ENVIRONMENTAL QUALITY, vol. 33, 2004, pages 2165-2173, XP002505157
- RODGERS J.D., BUNCE N.J.: "Treatment methods for the remediation of nitroaromatic explosives" WATER RESEARCH, vol. 35, no. 9, 2001, pages 2101-2111, XP002505156 Elsevier Science Ltd

## Description

### Technical Field

The invention deals with a method of disposal of azides and selected organic substances contained in wastewater from the production of explosives, blasting explosives and raw materials used for their production.

### Background Art

Industrial production of explosives is often based on the use of a precipitating reaction, which mainly holds good for synthesis of explosives on the basis of lead salts. Precipitating reactions are used e.g. within the production of lead azide, lead trinitroresorcinate and lead picramate.

Preparation of explosives by precipitation always involves production of wastewater. This wastewater typically contains residues of precipitated explosives (e.g. from rinsing of equipment, filtration cloths) and a dissolved fraction of explosives corresponding to the solubility of the corresponding salt. The wastewater further contains surplus reagents, salt produced by the precipitation reaction, usually nitrate based. Other components of the wastewater are rinsing and cleaning solutions.

The first step of disposal of concerned water is typically decomposition of the solid fractions of the explosive. Lead azide is usually decomposed with acids with the formation of azoimide and the corresponding lead salt, very often nitrate. Salts based of trinitroresorcinate or picramate are usually converted with sodium carbonate to less soluble lead carbonate and the corresponding salt of the organic substance.

The second step is disposal, i.e. decomposition of the anion and the third step is the removal of the lead cation from the wastewater by its precipitation in the form of an insoluble salt. The resulting precipitate is removed mechanically from the wastewater, e.g. by filtration or sedimentation. This invention deals with the disposal, i.e. decomposition of the anion and therefore the text below concerns the current state of the art of solving this issue.

For the decomposition of azides patent no. CS 245689 suggests a solution of sodium nitrite. In this step the toxic azoimide is converted to the slightly harmful azoxide. A disadvantage of this solution is the formation of nitrogen dioxide due to the reaction of sodium nitrite with the present nitric acid. Another disadvantage is that this method can be used for reliable disposal of azoimide, but it cannot be used to decompose the other above mentioned substances contained in wastewater.

Thus, other methods must be used for disposal of wastewater from the production of lead trinitroresorcinate and picramate. One of them is described in patent no. CS 245688 and it consists of adsorption of anions on active carbon, which precedes conversion of lead salts with the use of sodium carbonate. This method enables separation of the concerned anions, but it does not lead to their chemical decomposition.

It can be achieved e.g. by oxidation of the organic component of the explosive in an acidic solution with the use of a hypochlorite solution. A disadvantage of this method is that during chlorination of the aromatic core substituted with nitro-groups toxic chloropicrin is produced as tertiary waste. Another disadvantage is strong corrosive stress of the equipment with chlorine, which is manifested through increased costs of its purchasing and operation.

Therefore, disposal of the above mentioned substance with UV radiation in the presence of hydrogen peroxide described in the article of Alnaizy R., Akgerman A.: Oxidative treatment of high explosives contaminated wastewater, Water Research, 33, 9, 2021-2030 (1999) appears to be more suitable from the environmental point of view. In this case intensively stirred and heated mixture of wastewater with hydrogen peroxide is exposed to the effect of UV light with the predominant wavelength of 254 nm. A disadvantage of this method consists in relatively high losses of hydrogen peroxide and the resulting high consumption.

An alternative solution is the use of potassium hyperoxide, which is described in the US patent no. US 6.118.039 (2000). With regard to strong oxidation effects of potassium hyperoxide the concerned substances are decomposed in a few minutes.

The US patent no. 5.558.783 (1996) called "Supercritical oxidation reactor" describes the possibility of destruction of explosives and rocket fuel by their oxidation in water in the supercritical condition, i.e. at a high temperature and pressure by spraying of gaseous oxygen. This method is very demanding for the equipment, which is disadvantageous mainly in case of processing of higher volumes of wastewater.

Japanese patent document no. 2005 046763 (NIPPON CHEMICAL IND, JAPAN ATOMIC ENERGY RES INST), published 24 February 2005, discolses a method of disposal of wastewater containing dioxins, dioxins precursors or phenol-type endocrine disrupting substances, the method comprising reducing pH of wastewater to a value lower than 3 and oxidizing contaminants with a solution containing permanganate ion. This method does not solve completely a problem of destroying a part of compounds contained in explosives production process wastewater, moreover when including some compounds developed uder preliminary steps before the disposal phase of cleaning said wastewater.

The article ADAM M.L., COMFORT S.D., MORLEY M.C., SNOW D.D.: "Remediating RDX-Contaminated Ground Water with Permanganate: Laboratory Investigation for the Pantex Perched Aquifer" (JOURNAL OF ENVIRONMENTAL QUALITY, vol.33, 2004, pp.2165-2173) discloses the information that potassium permanganate is an oxidizing agent with a strong affinity for organic compounds containing carbon-carbon double bonds, aldehyde groups or hydroxyl. It can be useful for disposal of for example picramate and trinitroresorcinate, containing such this type of carbon-carbon double bonds. But, in this specialized area, it is not obvious, if this method, as described, can completely solve the problem of disposal of explosives production process wastewater, because said wastewater could contain other contaminants, where it is not obvious if they couldn't change unwillingly the disposal process or produce another contaminants.

In a situation above described the technical problem to be solved by present invention is to be seen in combining and proving described known methods and adjusting the detailed conditions both by defining the compounds for being contained in said processed wastewater and by defining optimal conditions of disposal process or method, for the best available results would be achieved. It is apparent that for example picramate and trinitroresorcinate or similar are included in a group, which can be defined, in general, as compounds on the basis of an aromatic compound the benzene core of which contains as substituents nitro groups or amino groups, but for a purpose of this special use of said method the range of compounds is to be defined closer to a real content of compounds, contained in usual explosives production process wastewater.

### Disclosure of Invention

The principle of the invention is that wastewater containing the concerned substances, namely substances with an inorganic constituent on the basis of azides and/or substances with an organic constituent on the basis of an aromatic compound the benzene core of which contains as substituents nitro groups or amino groups, and in particular lead or alkali metal azide, lead or magnesium trinitroresorcinate and lead or sodium picramate, is acidified to the pH value 1 and less, in the first step. The solution can be suitably acidified with addition of diluted nitric acid. In the second step the component forming the anion of the explosive, usually an azide, trinitroresorcinate or picramate, is decomposed by addition of a solution containing permanganate ions.

Compared to the existing methods of disposal of wastewater from the production of explosives this method shows several advantages while the combination of these advantages may be significant in a number of cases.

The first advantage is its versatility, i.e. the possibility to use the same method and the same reagents for the disposal of liquid waste from the production of all the above mentioned explosives. This fact allows e.g. simultaneous disposal of waste from the production of different explosives or the use of the same equipment for gradual disposal of wastewater from the production of different explosives. In the case of separate disposal of different explosives it provides the advantage of the possibility of common preparation or dosing of the used reagents. The versatility certainly has a positive impact on enhancing work safety during wastewater disposal.

Another advantage is the fact that the oxidation reaction used for the disposal is relatively quick, it takes several minutes, and enables a high degree of oxidation of the disposed components of the wastewater, which is very important from the environmental point of view. The balanced status of the reaction is substantially shifted towards the products due to the redox potential value of the used reagent while the products of the reduction of permanganate are slightly toxic or not toxic at all. These products can be easily removed from wastewater in the form of hardly soluble substances, mostly as oxides, hydrated oxides and hydroxides. If they are removed together with lead ions, they act as flocculants and improve capturing of the lead precipitate which is generally the hydroxide, hydrated oxide, carbonate or sulphide, namely during the filtration of the treated wastewater.

Another advantage is simple and easy monitoring of the course of disposal. A suitable instrumental technique is potentiometric indication, i.e. observing the moment of a significant increase of the redox potential. The course of the reaction can also be checked visually as the addition of permanganate dyes the treated water violet. In the course of the disposal - oxidation of the substances in the wastewater the colour is quickly lost as the violet colour disappears and at the same time the intensity of wastewater coloration with the disposed substances is reduced. At the end of the disposal the wastewater is virtually colourless. After addition of a super-stechiometric quantity of permanganate the wastewater becomes brown due to the produced manganese dioxide.

The samples described below illustrate, but do not limit the scope of the subject matter of the invention in any way. Experts involved in this area will find advantages of the present solution obvious and they would certainly find other possibilities of embodiments of the invention within the specified patent claims.

### Description of the Preferred Embodiment

### Sample 1

Wastewater from the production of lead azide was drawn. This wastewater contained solid fractions of lead azide and a solution of lead azide corresponding to the solubility of this salt. Besides the above mentioned monitored and disposed components the wastewater contained sodium nitrate generated during the synthesis of the explosive, unreacted super-stechiometric fraction of dissolved lead nitrate, nitric acid used for rinsing of the equipment and possible products of its reaction with the above mentioned substances.

In the first step 10% solution of nitric acid was added to this wastewater during continuous stirring until pH 1 value was achieved. In the second step 2% solution of permanganate was added to this acidified wastewater. At the beginning approx. 60% of the volume of the permanganate solution that is theoretically necessary for complete oxidation of all the present azide ions was added all at once while the rest was dosed gradually.

The end of oxidation of azide ions and consequently the end of addition of permanganate was indicated with the used of the potentiometric method on the basis of an increase of the redox potential value. The end of disposal, i.e. oxidation of azide ions is also perceivable visually since the surplus of permanganate reacts with the resulting manganese salt. The product of their reaction is the insoluble manganese dioxide, which gives the originally colourless solution brown colour. Completeness of disposal of azide ions in the wastewater was further verified and confirmed photometrically on the basis of the creation of a complex with a ferrous salt.

### Sample 2

Wastewater from the production of lead trinitroresorcinate was drawn. This wastewater contained solid fractions of lead trinitroresorcinate, a solution of lead trinitroresorcinate corresponding to the solubility of this salt and unreacted super-stechiometric fraction of dissolved magnesium trinitroresorcinate. Besides the above mentioned monitored and treated components the wastewater further contained magnesium nitrate produced during the synthesis of the explosive, a solution of acetic acid, a solution of sodium carbonate used for rinsing of the equipment and possible products of reaction of these reagents with the above mentioned substances.

This wastewater was treated in the same way as in sample 1. The end of oxidation of organic substances in the wastewater and thus the end of addition of permanganate was indicated with the potentiometric method, on the basis of an increase of the redox potential value.

The course of gradual disposal of the trinitroresorcinate can also be checked visually on the basis of dropping intensity of yellow coloration of the solution until its discoloration. Surplus of permanganate in the solution was visually manifested in the same way as in sample 1.

Completeness of disposal of trinitroresorcinate was evaluated on the basis of consumption of permanganate until the point of equivalence and further verified with an analysis of an extract from the treated wastewater with the use of the mass spectroscopy method.

### Sample 3

Wastewater from the production of lead picramate was drawn. This wastewater contained solid fractions of lead picramate, a solution of lead picramate corresponding to the solubility of this salt unreacted super-stechiometric fraction of dissolved lead nitrate. Besides the above mentioned monitored and treated components the wastewater further contained sodium nitrate produced during the synthesis of the explosive a solution of sodium carbonate used for rinsing of the equipment and possible products of reaction of these reagents with the above mentioned substances.

This wastewater was treated in the same way as in samples 1 and 2. The end of oxidation of organic substances in the wastewater, i.e. the end of addition of the permanganate solution, was indicated with the potentiometric method, on the basis of an increase of the redox potential.

The course of gradual disposal of the picramate can be monitored similarly to the above mentioned samples, just the original colour of the solution was reddish brown.

Completeness of disposal of the picramate was evaluated on the basis of the consumption of permanganate to the point of equivalence and it was further verified with an analysis of an extract from the treated wastewater with the use of the mass spectrometry method.

### Industrial Applicability

The method of disposal of wastewater based on the invention can be used for disposal of wastewater from the production of explosives on the basis of lead azide, lead trinitroresorcinate and lead picramate and the production of raw materials necessary for the synthesis of the above mentioned explosives. It can be also used for disposal of the above mentioned groups of substances in wastewater from other kinds of production.

## Claims

1. A method of disposal of explosives production process wastewater containing substances with an inorganic constituent on the basis of azides and/or substances with an organic constituent on the basis of an aromatic compound the benzene core of which contains as substituents nitro groups or amino groups, and in particular lead or alkali metal azide, lead or magnesium trinitroresorcinate and lead or sodium picramate, **characterized in that** in the first step pH of the wastewater is treated to a value lower than 1 and in the second step the inorganic and/or organic constituent are oxidized with a solution containing the permanganate ion.

2. The method of wastewater disposal in accordance with claim 1, **characterized in that** a nitric acid is used for the treatment of the pH value and for the oxidation of wastewater constituents a permanganate solution is used.

3. The method of wastewater disposal in accordance with claim 1 or 2, **characterized in that** the pH value of wastewater and the end of oxidation of the constituent in the wastewater is checked with the potentiometric method.

## Patentansprüche

1. Ein Verfahren zur Entsorgung des Abwassers aus der Herstellung von Sprengstoff, welches Substanzen mit einem unorganischen Bestandteil auf der Basis von Aziden und/oder Substanzen mit einem unorganischen Bestandteil auf der Basis einer aromatischen Komponente enthält, deren Benzolkern als Substituenten Nitrogruppen oder Aminogruppen und insbesondere Blei oder Alkalimetallazid, Blei oder Magnesiumtrinitroresorcinat enthält und Blei oder Natriumpikranat, **gekennzeichnet dadurch, dass** im ersten Schritt der pH-Wert des Abwassers auf einen Wert unter 1 korrigiert wird und im zweiten Schritt der unorganische und/oder organische Bestandteil mit einer Lösung oxidiert werden, die das Permanganat-Ion enthält

2. Das Verfahren zur Entsorgung von Abwasser in Übereinstimmung mit Anspruch 1, **gekennzeichnet dadurch, dass** eine Salpetersäure für die Korrektur des pH-Werts und zur Oxidierung der Abwasserbestandteile eine Permanganat-Lösung verwendet wird.

3. Das Verfahren zur Entsorgung von Abwasser in Übereinstimmung mit Anspruch 1 oder 2, **gekennzeichnet dadurch, dass** der pH-Wert von Abwasser und das Ende der Oxidierung des Bestandteils im Abwasser mit dem potentiometrischen Verfahren geprüft werden.

## Revendications

1. Procédé d'élimination des eaux usées par la production d'explosifs, ces eaux contenant des substances avec un constituant inorganique sur la base d'azides ou des substances ayant un constituant organique sur la base d'un composé aromatique, dont le noyau benzénique contient, en tant que substituts, des groupes nitro ou amino, et notamment du plomb ou de l'azoture de métal alcalin, du plomb ou du trinitrorésorcinate de magnésium et du plomb ou du picramate de sodium, **caractérisé par le fait que** lors de la première étape, le pH des eaux usées est traité à une valeur inférieure à 1 et lors de la deuxième étape, des constituants inorganiques et/ou organiques sont oxydés avec une solution contenant de l'ion permanganate.

2. Le procédé de rejet d'eaux usées selon la revendication 1, **caractérisé par le fait que** l'acide nitrique est utilisé pour le traitement de la valeur du pH et qu'une solution de permanganate est utilisée pour l'oxydation des constituants des eaux usées.

3. Le procédé de rejet d'eaux usées selon la revendication 1 ou 2, **caractérisé par le fait que** la valeur du pH des eaux usées et la fin de l'oxydation du constituant dans les eaux usées sont vérifiées par la méthode potentiométrique.
